Europäisches Patentamt

European Patent Office

Office européen des brevets

(19)

(11) Publication number: **0 110 564**
**B1**

(12) # EUROPEAN PATENT SPECIFICATION

(45) Date of publication of patent specification: **07.01.87**

(21) Application number: **83306552.7**

(22) Date of filing: **27.10.83**

(51) Int. Cl.⁴: **A 01 N 59/04,** A 01 N 59/06,
A 01 N 59/00 // (A01N59/06,
43:08, 37:40, 37:36, 37:06,
37:04, 37:02),(A01N59/00,
43:08, 37:40, 37:36, 37:06,
37:04, 37:02)

(54) Nematocidal and insecticidal composition and method for the control of the said pests.

(30) Priority: **27.10.82 HU 343782**

(43) Date of publication of application:
**13.06.84 Bulletin 84/24**

(45) Publication of the grant of the patent:
**07.01.87 Bulletin 87/02**

(84) Designated Contracting States:
**AT BE DE FR GB IT NL**

(56) References cited:
**DE-A-3 017 639**
**US-A-1 923 004**

**CHEMICAL ABSTRACTS, vol. 91, no. 25,
December 17, 1979, page 181, no. 205653r,
Columbus, Ohio, US**

**CHEMICAL ABSTRACTS, vol. 78, no. 21, May
28, 1973, page 86, no. 132710b, Columbus,
Ohio, US**

(73) Proprietor: **CHINOIN Gyogyszer és Vegyészeti
Termékek Gyára RT.
To utca 1-5
H-1045 Budapest IV (HU)**

(72) Inventor: **Angyan, Sandor
Bartok B 25
H-1114 Budapest (HU)**
Inventor: **Peterdi, Viktoria
Szabolcska ut 5
H-1114 Budapest (HU)**
Inventor: **Racs, Istvan
Frakno u 26/1
H-1115 Budapest (HU)**

(74) Representative: **Skailes, Humphrey John et al
Frank B. Dehn & Co. Imperial House 15-19
Kingsway
London WC2B 6UZ (GB)**

Courier Press, Leamington Spa, England.

## Description

This invention relates to a granulated composition and method for the control of nematodes and soil dwelling insects by means of this composition. More particularly it is directed to a nematocidal and insecticidal composition based on an attractant effect. The composition of the present invention can be used per se or in combination with soil disinfectants.

It is known that nematodes and terricolous pests of cultivated plants can be controlled with so-called general or total soil disinfectants (fumigants) and insecticides and insecticides-nematocides, respectively.

Of the known compositions the general or total soil disinfectants exhibit the highest biological activity, e.g. methyl bromide, carbon disulfide, methyl isocyanate (Di-tropex), 1,3 - dichloro - propene+1,2 - dichloro - propane (Shell DD), Dazomet (tetrahydro - 3,5 - dimethyl - 1,3,5 - thiadiazin - 2 - thione; Basinid).

Although the known fumigants possess high biological activity, they also possess several properties which restrict their application. For this reason the said known fumigants can be practically used only under greenhouse, tree and vine nursery conditions. However, nematode and terricolous insect pests endanger agricultural and horticultural plants cultivated on open land as well (e.g. Heterodera, Meloidogyna, Xyphynoma, Longidorus, Agroites sp., Melolontha sp. larva on grape, fruits, vegetables and ornamental plants).

The said pests can be controlled by phosphoric acid ester and carbamate derivatives having insecticidal and insecticidal-nematocidal activity, respectively.

The said compositions may be formulated in the form of granules (G), emulsifiable liquid concentrates (EC), aqueous suspensions (FW), wettable powders (WP), preferably granules (G).

The following compositions are the most well-known:
1. Chinufur 10 G (carbofuran: 2,3-dihydro-2,2-dimethyl-7-benzofuranyl-N-methyl-carbamate)
2. Furadan 10 G (carbofuran)
3. Furadan 4 F (carbofuran)
4. Vydate 10 G (Oxamyl: S-methyl-N′,N′-dimethyl-N-(methylcarbamoyl)oxy-1-thio-oxamidate)
5. Temik 15 G [aldicarb: 2-methyl-2-(methylthio)-propionaldehyde-O-(methylcarbamoyl)-oxime]
6. Thimet 10 G [phorat: O,O-diethyl-S-(ethylthiomethyl)-phosphorodithioate]
7. Mocap 10 G [etoprop: O-ethyl-S,S-dipropyl-phosphorodithioate]
8. Counter 15 g [terbuphos: S-((1,1-dimethyl-ethyl)-thio-methyl)-O,O-diethyl-phosphorodithioate]
9. Nemacur 15 G (phenaminphos: ethyl-4-methylthio-m-tolyl-isopropyl-phosphoramidate)
10. Basudin (diazinon: O,O-diethyl-O-2-isopropyl-6-methyl-pyrimidine-4-yl-phosphorothioate)
11. Ekalux (quinalphos: O,O-diethyl-O-quinoxalyl-2-yl-phosphorothioate).

The trade names given above are trade marks.

According to the known pest control methods granules are applied to the soil before or during sowing.

The active ingredient gets into the soil from the granules by desorption and the toxic (poison) zone formed in the vicinity of the granules contains a lethal amount of active ingredient. In the case of contact pesticides (e.g. diazinon) the killing effect is exerted by contact between the active ingredient and the pest.

Systemic compositions exert their killing effect either by contact (as dermal poison) or by absorption in the roots of the host plant; in the latter case the active ingredient gets into the organism of the pest sooner or later with the foodstuff and acts as gastric poison.

Certain active ingredients—e.g. phorat, etoprop—exhibit in addition to an excellent systemic activity a significant fumigating effect by exerting their toxic effect against soil dwelling insects in the gaseous phase.

The vapour pressures (v.p.) of some significant fumigant and insecticidal fumigant granules are summarised in the following Table.

2

# 0 110 564

| | v.p. | °C |
|---|---|---|
| Fumigants | | |
| A. | (1 mm Hg=1,33 bar) | |
| carbon disulfide | 357.1 mmHg | 25.0 |
| Ethylene bromide | 11.1 mmHg | 25.0 |
| 1,2-Dichloro-propane | 210.0 mmHg | 19.0 |
| Shell DD | 35.0 mmHg | 20.0 |
| Methyl isocyanate | 20.7 mmHg | 20.0 |
| Insecticidal-nematocidal granules | | |
| B. | | |
| Carbofuran | $2 \times 10^{-5}$ mmHg | 33.0 |
| Oxamil | $2.3 \times 10^{-4}$ mmHg | 25.0 |
| Diazinon | $1.4 \times 10^{-4}$ mmHg | 20.0 |
| Etoprop | $3.5 \times 10^{-4}$ mmHg | 26.0 |
| Phorat | $8.4 \times 10^{-4}$ mmHg | 20.0 |

Thus the v.p. of the active ingredients of insecticidal-nematocidal granules are from six to nine orders of magnitude lower than those of fumigants. In group B, on the basis of the v.p. properties, carbofuran shows the lowest and phorat the highest value. For this reason the pesticidal effect of phorat having a "high" v.p. value is not so strongly dependent on the accidental contact of the active ingredient and the pest.

The efficiency of both contact and systemic insecticides is fundamentally influenced by the physico-chemical properties of the soil, the desorption characteristics of the active ingredient and the formulation, the localization of the pests in the soil, the stage of development of the pest (egg, larva, nymph, developed organism); it is also relevant whether the pest is in a state of dormancy (anabiosis, diapausa) or has already passed this stage.

The high efficiency of treatment carried out in spring time on the complete area or in the rows is ensured by the following factors:

— attractant effect of the plants:
— "sensitivity" and active vital functions of the pests:
— simultaneous presence of the pest and the "toxic zone" (or poison strip) in the case of row treatment in the same soil.

The substances secreted by the vital functions of the roots of the plants (e.g. carbon dioxide, organic acids, amino acids etc) exhibit an attractant effect on the soil dwelling pests.

A large number of pests (nematodes, terricolous insect pests) respond to the attractant effect of carbon dioxide.

The "wheat luring" forecast method of Manninger (Bognár-Huzián: Növényvédelmi Állattan, Mezőgazdasági Könyvkiadó, 1974; Benedek-Surján-Fésüs: Növényvédelmi Előrejelzés, Mezőgazdasági Kiadó, 1974) is based on the attractant effect of carbon dioxide produced by the roots of germinating wheat. The said attractant effect enables the forecast of wireworms and grubs and the prediction of the risk of damage. According to Balachowsky (Entomologie appliquée, Paris, Masson et Cie, 1963) the larvae of the insect Ortiorrhynchus ovatus perceive the delivery of carbon dioxide at a distance of 10 cm and a change of the carbon dioxide concentration assists the larvae in the search for roots.

The generation of carbon dioxide to aid disintegration and dispersion of certain insecticide compositions is described in DE—A—3017639, US—A—1923004, Chemical Abstracts 78, 132710b and Chemical Abstracts 91, 205653r.

The present invention is based on the recognition that the efficiency of compositions for the control of nematodes and soil dwelling pests can be increased by using carbon dioxide evolution as a pest lure.

The said effect is particularly enhanced if active ingredients having a low vapour pressure (e.g. carbofuran, oxamyl) are used for the control of soil dwelling pests and nematodes.

The invention provides granules for the control of nematodes and soil dwelling pests which comprise (e.g. in an amount of up to 50% by weight) one or more of the following insecticidal-nematocidal

3

compounds carbofuran, quinalphos, etoprop, oxamyl, phorate, aldicarb, phenaminphos, terbuphos or diazinon and 0.1—20% by weight—preferably 5—10% by weight of a binary or tertiary mixture of a hydrogen carbonate (I) of the formula $MHCO_3$ and/or a carbonate (II) of the formula $(M)_nCO_3$ (wherein M is a mono- or divalent metal ion or an ammonium group and n is 1 or 2) and an organic acid; the weight ratio of the hydrogen carbonate (I) and/or the carbonate (II) to the organic acid being 1:10—10:1—preferably 3:1—1:3; in admixture with solid organic or inorganic carriers and optionally further auxiliary agents (such as hydrophobic silicic acid, sodium aluminium silicate, polyvinyl-pyrrolidone-polyvinyl acetate copolymer, magnesium stearate and oils of animal, vegetable or mineral origin).

The pesticide can be provided either in the same granules as the other ingredients or in separate granules for on site mixing.

The composition is generally applied at a rate of 1—100 (preferably 20—50) kg/ha.

As hydrogen carbonate of the general Formula I preferably sodium, ammonium or potassium hydrogen carbonate—particularly potassium bicarbonate—can be used. As carbonate of the general Formula II preferably calcium carbonate can be used. From the group of organic acids for the present invention those organic acids are preferred which have a dissociation equilibrum constant between $10^{-5}$ and $10^{-2}$, e.g. citric acid, tartaric acid, oxalic acid, ascorbic acid, succinic acid, butyric acid, maleic acid, salicylic acid, particularly citric acid and succinic acid. The salts thus formed can be easily adsorbed as a result of their good water-solubility. Sunflower oil is preferably used as an oil additive.

The compositions of the present invention can be produced by preparing a homogeneous mixture from the organic acid (e.g. citric acid) and the hydrogen carbonate of the general Formula I (e.g. potassium bicarbonate) and/or carbonate of the general Formula II (e.g. calcium carbonate) in a conventional mixer and applying the premix thus obtained onto an organic or inorganic carrier—preferably onto a carrier of vegetable origin or synthetic—optionally in the presence of an auxiliary agent.

As inorganic carrier quartz sand, diatomaceous earth or ground limestone can be used. As organic carrier Fugran (a carrier prepared from hydrolysed agricultural waste materials, see DOS No. 2,655,398) or agricultural grist can be used.

The insecticidal-nematocidal compound may be used in the form of Chinufur 5 or 10 G, Vydate 10 G, Temik 10 G or Nemacur.

The pre-mix can also contain a water-repellent agent, such as colloidal silicic acid or hydrophobic sodium-silico aluminate (e.g. HDK H 15, HDK H 20, HDK H 30, HDK H 2000 and HDK H 2 F manufactured by Wacker, or Aerosil R 972 or advantageously Aerosil R 972 produced by Degussa; Aerosil is a trade mark).

The composition of the present invention can further contain hydrophobic auxiliary agents and known film-forming agents and adhesives (e.g. polyvinyl alcohol, polyvinylacetate, polyvinylpyrrolidone, carbomethoxy cellulose, magnesium stearate, sugar, gelatine, resins of natural origin) which ensure the stability of the composition during storage. Thus during storage carbon dioxide is not evolved or only to a small extent, but is liberated gradually in use, under the effect of the natural humidity of the soil.

The desired desorption velocity can be adjusted by appropriate modification of the ratio of the components and thus nematocidal granules having different durations of effect can be obtained.

The following effects and activities are demonstrated by laboratory, small-scale and industrial scale field experiments.

1) The granules of the present invention comprising a hydrogen carbonate and/or carbonate and an organic acid evolve carbon dioxide and exhibit biological activity (attractant effect).

2) The nematocidal effect is exhibited by simulating (feigning) the carbon dioxide production of the roots of the plants.

3) The activity of the insecticidal-nematocidal compositions—preferably granules—is increased by the attractant effect of carbon dioxide.

4) By using the combination of the present invention the amount of active ingredient applied onto a unit area can be decreased without any loss of activity.

The components used in the composition must meet the following requirements:

1) They do not adversely effect in the applied doses the physico-chemical characteristics of the soil.

2) They do not effect the physiological properties, germination and further growth of the plants in an adverse manner.

3) The substances which are formed during the reaction of the components beside the carbon dioxide comply with the conditions under 1 and 2.

4) They can be formulated with insecticides and nematocides (granules).

5) The composition can be applied onto the soil by usual methods (adapter).

6) Their toxicity is low.

Further details of the present invention are to be found in the following Examples. Examples 1, 5 and 11 are given as examples of basic formulations to which an insecticide or nematocide may be added in accordance with the invention.

Example 1

4.84 parts by weight of citric acid and 0.04 parts by weight of Aerosil 972 R are admixed in a slowly moving homogenizer, whereupon 14.64 parts by weight of potassium hydrogen carbonate are added. The pre-mix thus obtained is subjected to dry homogenization with 174.6 parts by weight of granules (Fugran)

# 0 110 564

in a rolling drum. In a separate apparatus 6 parts by weight of a co-polymer of polyvinyl pyrrolidone and polyvinyl acetate (Luviskol VA 64:, film forming agent) are dissolved in 40 parts by weight of dichloromethane. The solution thus obtained is sprayed onto the homogenized granules. After drying 200.12 parts by weight of granules are obtained, particle size 0.2—1.0 mm.

Example 2

One proceeds according to Example 1 except that in the place of Fugran 174.6 g. parts by weight of Chinufur 10 G are weighed in. Thus 200.12 parts by weight of granules are obtained which contain 20.0 parts by weight of carbofuran. (The Chinufur 10 G is a composition comprising 10% by weight of carbofuran on Fugran carrier).

Example 3

4.84 g. citric acid are admixed 0.03 part by weight of Aerosil R 972 and the mixture is homogenized with a mixture of 14.64 parts by weight of potassium hydrogen carbonate and 0.03 part by weight of Aerosil R 972. The pre-mix thus obtained is subjected to dry homogenization with 149 parts by weight of granules (Fugran). A solution of 10 parts by weight of carbofuran and 22 parts by weight of dimethyl formamide is sprayed onto the pre-homogenized granules. Thus 200.64 parts by weight of granules are obtained which contain 10 parts by weight of carbofuran.

Examples 4—10

The process according to Example 3 is carried out except that the following components are admixed:

### Example 4

| Component | Amount, parts by weight |
|---|---|
| Tartaric acid | 4.84 |
| Potassium hydrogen carbonate | 14.64 |
| Aerosil R 972 | 0.04 |
| Carbofuran | 10.00 |
| Dimethylformamide | 22.00 |
| Fugran | 149.00 |

### Example 5

| Component | Amount, parts by weight |
|---|---|
| Tartaric acid | 4.84 |
| Potassium hydrogen carbonate | 14.64 |
| Aerosil R 972 | 0.04 |
| Luviskal VA 64 | 6.00 |
| Fugran | 174.60 |

### Example 6

| Component | Amount, parts by weight |
|---|---|
| Tartaric acid | 4.84 |
| Potassium hydrogen carbonate | 14.64 |
| Aerosil R 972 | 0.04 |
| Luviskal VA 64 | 6.00 |
| Carbofuran | 20.90 |
| Fugran | 153.70 |

### Example 7

| Component | Amount, parts by weight |
|---|---|
| Citric acid | 4.84 |
| Potassium hydrogen carbonate | 14.64 |
| Aerosil R 972 | 0.06 |
| Quinalphos | 10.30 |
| Fugran | 171.00 |

5

### Example 8

| Component | Amount, parts by weight |
|---|---|
| Citric acid | 4.84 |
| Potassium hydrogen carbonate | 14.64 |
| Aerosil R 972 | 0.06 |
| Quinalphos | 10.30 |
| Fugran | 171.00 |

### Example 9

| Component | Amount, parts by weight |
|---|---|
| Citric acid | 4.84 |
| Potassium hydrogen carbonate | 14.04 |
| Aerosil R 972 | 0.06 |
| Prophos (etotrop) | 20.60 |
| Fugran | 171.00 |

### Example 10

| Component | Amount, parts by weight |
|---|---|
| Tartaric acid | 4.81 |
| Potassium hydrogen carbonate | 14.04 |
| Aerosil R 972 | 0.06 |
| Prophos (etoprop) | 20.60 |
| Fugran | 171.00 |

Example 11

A mixture of 0.52 part by weight of paraffin oil and 0.13 part by weight of Triton® X-45 is applied onto quartz sand. The pre-moistened quartz sand is homogenized with a homogenized premix of 2.7 parts by weight of citric acid, 3.63 parts by weight of potassium hydrogen carbonate and 0.015 part by weight of Aerosil R 972 in a rolling drum. A solution of 0.91 part by weight of magnesium stearate, 4.09 parts by weight of paraffin oil and 10 parts by weight of dichloromethane is sprayed onto the homogenized granules. After drying the granules are coated with a solution of 3.0 parts by weight of Luviskol VA and 10.5 parts by weight of dichloromethane and the dichloromethane is evaporated. Thus 49.99 parts by weight of granules are obtained.

Example 12

2.7 parts by weight of citric acid are admixed with 0.015 part by weight of Aerosil R 972 in a slowly moving homogenizer whereupon 3.63 parts by weight of potassium hydrogen carbonate are added. The pre-mix is subjected to dry homogenization with 42.2 parts by weight of Temik 10 G granules in a rolling drum. The granules are coated with a solution of 1.5 parts by weight of Luviskol VA 64 and 10 parts by weight of dichloromethane. After drying 50.0 parts by weight of granules are obtained, aldicarb content 8.4% by weight.

Example 13

2.7 parts by weight of citric acid are admixed with 0.015 part by weight of Aerosil R 972 in a slowly moving homogenizer whereupon 3.63 parts by weight of potassium hydrogen carbonate are added. The pre-mix thus obtained is subjected to dry homogenization with 42.2 parts by weight of Nemacur 10 G granules in a rolling drum. The granules are coated with a solution of 1.5 parts by weight of Luviskol VA 64 and 10 parts by weight of dichloromethane. After drying 50.0 parts by weight of granules are obtained, phenaminphos content 8.4%.

Example 14

2.7 parts by weight of citric acid and 0.015 part by weight of Aerosil R 972 are admixed in a slowly moving homogenizer, whereupon 3.63 parts by weight of potassium bicarbonate are added. The pre-mix thus obtained is subjected to dry homogenization with 42.2 parts by weight of Vydate 10 G granules in a rolling drum. The granules are coated with a solution of 1.5 parts by weight of Luviskol KA 64 and 10 parts by weight of dichloromethane. After drying 50.045 parts by weight of granules are obtained, oxamyl content 8.4%.

6

Example 15

The contact toxicity of the components of the composition of the present invention is tested on Chenorabditis elegans and Meloidogyne incognita nematode species.

Description of the test

The substances and combinations tested are added in the given amounts to agar in which the test organisms are raised (see tests 1—7).

As test organism Chenorabditis elegans and Meloidogyne incognita infective larvae obtained from eggs are used; 25 organisms per plate (Petri-dish) are applied. The effect is evaluated 24 hours after the organisms are placed on the plate and the number of organisms killed during the test is determined as well.

The results are expressed as the percentage of killed nematodes (Table I). 4 Replicates are carried out.

The ratio of the components of the combinations in given below:

1. Carbofuran:tartaric acid=2.06:1
2. Carbofuran:citric acid=4.13:1
3. Carbofuran:$KHCO_3$=1.38:1
4. Carbofuran:tartaric acid: $KHCO_3$=2.06:1:3
5. Carbofuran:citric acid: $KHCO_3$=4.13:1:3
6. Tartaric acid:$KHCO_3$=1:3
7. Citric acid:$KHCO_3$=1:3.

TABLE I

Mortality (%)

| Tested components (µg./ml.) | Chenorabditis E. | | | | Meloidogynes | | | |
|---|---|---|---|---|---|---|---|---|
| | 1 | 10 | 100 | 1000 | 1 | 10 | 100 | 1000 |
| 1. Carbofuran | 5.0 | 7.5 | 95.0 | 100.0 | 0 | 10. | 27.5 | 85.0 |
| 2. Fugran | 2.5 | 2.5 | 0.0 | 0.0 | 2.8 | 0.0 | 0.0 | 0.0 |
| 3. Tartaric acid | 2.5 | 1.0 | 0.0 | 0.0 | 0.0 | 2.5 | 2.5 | 0.0 |
| 4. Citric acid | 0.0 | 0.0 | 0.0 | 0.0 | 0.0 | 2.8 | 0.0 | 0.0 |
| 5. $KHCO_3$ | 0.0 | 5.0 | 0.0 | 0.0 | 0.0 | 2.5 | 0.0 | 0.0 |
| 6. Carbofuran+ tartaric acid | 0.0 | 5.0 | 23.0 | 100.0 | 2.7 | 2.5 | 2.5 | 27. |
| 7. Carbofuran+ citric acid | 0.0 | 12.5 | 50.0 | 100.0 | 0.0 | 2.8 | 10.5 | 35.0 |
| 8. Carbofuran+ $KHCO_3$ | 5.0 | 7.5 | 20.0 | 100.0 | 0.0 | 2.6 | 15.0 | 30.0 |
| 9. Tartaric acid+ $KHCO_3$ | 2.5 | 2.5 | 0.0 | 5.0 | 0.0 | 0.0 | 0.0 | 0.0 |
| 10. Citric acid+ $KHCO_3$ | 0.0 | 0.0 | 2.5 | 0.0 | | 0.0 | 0.0 | 0.0 |
| 11. Carbofuran+ citric acid+ $KHCO_3$ | 0.0 | 2.5 | 25.0 | 0.0 | | 4.0 | 0.0 | 38.5 |
| 12. Carbofuran+ tartaric acid +$KHCO_3$ | 2.5 | 5.0 | 10.0 | 100.0 | 0.0 | 0.0 | 10.0 | 27.5 |

The object of the test is to determine the biological efficiency of the components of the compositions of the present invention per se and in combinations in concentrations of 1, 10, 100 and 1000 ppm., respectively.

The data obtained in the Petri-dish experiments illustrate the contact toxicity of the components and combinations thereof.

Treatments Nos. 2—5 show unambiguously that the "additives" per se are completely inactive as contact poison (nematocide). These components are Fugran carrier, tartaric acid, citric acid, KHCO₃.

In the double and triple combinations the efficiency of the individual treatments (contact toxicity) does not increase as compared to the pure active ingredient (Carbofuran) in the concentrations used.

Example 16
Effect on meloidogyne incognita
Description of the test

Cultivating plates (diameter 12 cm.) are filled with soil strongly infected by root gall threadworm (Meloidogyne incognita). The weighed granules are applied into the soil placed in the plate: (on the complete surface, at a depth of 4 cm.). As test plant stiff stemed tomato (species Kecskemét) is used. The seedlings are cultured under sterile conditions on a perlite medium until 9 weeks old; there was no Meloidogyne incognita infection during the first treatment.

The plants are grown at an air temperature of 22—24°C for 6 weeks until the safe growth of the Meloidogyne incognita generation. The soil is washed off from the roots and the number of galls on each plant is determined. The efficiency of the treatments is calculated by means of the Abbot formula. The tests are carried out by using the composition according to Example 1.

The Abbot formula is the following:

$$\text{Efficiency} = 100 \times \frac{\dfrac{\text{treated mortality \% − untreated}}{100 - \text{untreated mortality \%}}}{\dfrac{\text{mortality \%}}{100 - \text{untreated mortality \%}}}$$

The results are summarized in Table II.

**0 110 564**

TABLE II

| Treatment | Dose kg./ha. | Sown tomato | | Transplanted tomato | |
|---|---|---|---|---|---|
| | | Average No. of galls pro plant | Activity related to control, % | Average No. of galls pro plant | Activity related to control, % |
| 10 days before sowing and planting | | | | | |
| 1. Citric acid+KHCO₃ granules | 20 | 6.1 | 27.4 | 6.0 | 52.0 |
| 2. Citric acid+KHCO₃ granules | 40 | 0.4 | 95.2 | 2.0 | 84.0 |
| 3. Chinufur 10 G (10% by weight of carbofuran) | 20 | 1.6 | 80.95 | 3.5 | 72.0 |
| 4. Chinufur 10 G (10% by weight of carbofuran) | 40 | 0.9 | 89.3 | 2.0 | 84.0 |
| 5. Control | — | 8.4 | — | 12.5 | — |
| Simultaneously with sowing and planting | | | | | |
| 1. Citric acid+KHCO₃ granules | 20 | 1.7 | 94.4 | 7.5 | 66.3 |
| 2. Citric acid+KHCO₃ granules | 40 | 4.1 | 86.4 | 5.25 | 76.4 |
| 3. Chinufur 10 G (10% by weight of carbofuran) | 20 | 7.8 | 74.4 | 6.5 | 70.8 |
| 4. Chinufur 10 G (10% by weight of carbofuran) | 40 | 0.2 | 99.9 | 3.0 | 86.5 |
| 5. Control | — | 30.1 | — | 22.3 | — |

Example 17

Test carried out in a growth dish

2 stage (invasion) larvae of Meloidogyne incognita threadworm are added to soil in pots having a diameter of 12 cm.; 100 larvae are applied into each pot. The test granules are applied into the root zone of tomato seedlings (three weeks old, Kecskemét species) just before the planting of the seedlings. Thirty days after planting the test plants are removed from the pots and their roots are made free from soil with running water. The evaluation is carried out by determining the number of galls (diameter 3—5 mm.) on the roots of the plants. The efficiency is related to the untreated control and calculated with the aid of the Abbot formula. The number of replicates is 4 (in each replicate 10 plants are used); thus each data is the result of 40 measurements.

9

TABLE III

| Treatment | Dose kg./ha. | Average No. of galls pro plant | Efficiency % (Abbot) |
|---|---|---|---|
| 1. Chinufur 10 G | 30 | 1.75 | 84.9 |
| 2. Composition according to Example 1 | 30 | 3.25 | 70.5 |
| 3. Chinufur 10 G+ citric acid KHCO$_3$ composition according to Example 2 | 30 | 0.00 | 100.0 |
| 4. 5% carbofuran+ citric acid, KHCO$_3$ composition according to Example 3 | 30 | 0.50 | 95.46 |
| 5. 5% carbofuran+ tartaric acid, KHCO$_3$ composition according to Example 4 | 30 | 0.00 | 100.0 |
| 6. Control | — | 11.0 | — |

Tests carried out in a laboratory growth dish

In this test the effect of compositions with or without carbofuran is evaluated. The medium (soil) into which the granules are applied enable

— the formation of point-like sources of stimulus,
— the formation of concentration gradient.

According to the test results the granules containing no carbofuran exhibit significant effect on the basis of the dose dependence both when sown together with the seeds of the tomato test plant and when applied into the dishes 10 days before the sowing of the sterile seedlings.

The effect of the combinations comprising carbofuran is striking already when comparing the 10 G formulations but the surplus effect of the compositions of the present invention manifests itself particularly when 5 G formulations are used.

Example 18
Activity against Heterodera sachti
Description of the test

The test is carried out in a "csernozjom soil" having an organic substance content of 2.1%. Sugarbeet (species Monopoli N 1) is sown in a depth of 4 cm. On the 10th April, the germ number is 95.000 95.000/stem/ha. Treatments are carried out simultaneously with sowing by means of an adapter mounted on a Ran Exacta sowing machine, the rows are treated. The average number of Heterodera sachti vesicles amounts to 12.3 pro 100 g. soil. The following characteristic data are measured:
1) Heterodera sachti infection index and efficiency of the treatment.
2) Infection of the plants on the 24th July.
3) Number of vesicles in 100 g. of soil, on the 24th July.
The results are summarized in Table IV.

10

TABLE IV

| Treatment | Dose kg./ha. | Infection index of the plants, on July 24 | Efficiency, on July 24 | No. of vesicles on July 24 |
|---|---|---|---|---|
| 1. 10% carbofuran (chinufur 10 G) | 20 | 0.22 | 56.86 | 9.0 |
| 2. 10% carbofuran+ citric acid+KHCO₃ (composition according to Example 2) | 20 | 0.09 | 82.35 | 3.2 |
| 3. 5% carbofuran+ tartaric acid+KHCO₃ (composition according to Example 4) | 20 | 0.29 | 43.13 | 14.0 |
| 4. Thimet 10 G | 20 | 0.44 | 13.72 | 32.4 |
| 5. Control | — | 0.51 | 0.0 | 26.0 |

Under field conditions the Heterodera sachti threadworm is the most dangerous nematode pest of sugar-beet. In our tests the compositions containing 5% by weight of carbofuran+additive and 10% by weight of carbofuran+additive, respectively are compared to the most widespreadly used known insecticidal-nematocidal granules. It has been found that the activity of the compositions of the present invention is superior to that of the known pesticides. The results obtained with the compositions of the present invention are better for all the measured characteristics than those of known compositions generally used for the control of soil dwelling pests of sugar-beet (Chinufur 10 G and particularly Thimer 10 G).

Example 19
Tests carried out in vine nursery
The tests are carried out in medium hard brown forest soil (Arany number 37—42; pH 7.5). Three replicates are made for each treatment.

The granules are applied onto the surface of soil by means of a dense row sowing machine and the working into the soil is accomplished with the aid of a rigal-plow equipped with a pre-plough. The Shell DD is applied in a dose of 1000 l./ha. by means of a special apparatus mounted in a rigal-plough.

The survey of the soil dwelling pests is carried out for each treatment and replicate by the usual survey and application methods (Baerman-type funnel application); three times of 100 g. of soil, each are used pro replicate. The efficiency against soil dwelling pests is calculated by means of the Schneider-Orelli formula, while the nematocidal activity is calculated with the aid of the Hendenson-Tilton formula.

| Schneider-Orelli formula | Soil dwelling pests |
|---|---|
| $$E\% = \frac{T-c}{100-c} \times 100$$ | E=efficiency, % <br> T=larvae killed during the treatment, % <br> c=larvae killed in the control, % |

Nematocidal effect with the Henderson-Tilton formula

$$\text{Effect } \% = 1 - \frac{t_2 \times U_1}{t_1 \times U_2} \times 100$$

$t_1 - t_2$=organism frequency of the treated area, before and after treatment
$U_1 - U_2$=organism frequency of the control, before and after treatment
The results are summarized in Table V.

11

TABLE V

| Treatment | Survey before treatment | | After treatment | |
|---|---|---|---|---|
| | No. of worms, wireworms | on 2.5 m² grubs | Efficiency, % wireworms | grubs |
| 1. Chinufur 10 G | 15.5 | 4 | 76.8 | 100.0 |
| 2. 5% carbofuran+ tartaric acid $CO_2$ (composition according to Example 4) | 15.5 | 4 | 93.37 | 100.0 |
| 3. 3% carbofuran+ citric acid $CO_2$ (composition according to Example 3) | 14.0 | 4 | 70.65 | 100.0 |
| 4. Shell DD | 19.5 | 1 | 71.03 | — |
| 5. Control | 19.0 | 3 | 0.0 | 0.0 |

1—3. 50—50 kg./ha.
4. 1000 l./ha., applied with a rigal-plough

TABLE V (continued)

| | | Number of nematodes in 100 g. of soil | | | | | |
|---|---|---|---|---|---|---|---|
| | | Before treatment | | After treatment | | Efficiency % | |
| Treatment | Dose kg./ha./l | 0—30 cm. | 30—60 cm. | 0—30 cm. | 30—60 cm. | 0—30 cm. | 30—60 cm. |
| 1. Chinufur 10 G | 50.0 | 347.3 | 381.6 | 45.5 | 47.6 | 85.2 | 89.1 |
| 2. Citric acid+ $KHCO_3$ (Example 1) | 50.0 | 244.6 | 405.1 | 33.0 | 25.8 | 85.5 | 94.5 |
| 3. 5% by weight carbofuran+citric acid+$KHCO_3$ (Example 3) | 50.0 | 257.8 | 271.1 | 17.0 | 11.5 | 92.9 | 96.3 |
| 4. 5% carbofuran+ tartaric acid+ $KHCO_3$ (Example 4) | 50.0 | 191.0 | 246.0 | 33.3 | 46.6 | 81.3 | 83.5 |
| 5. Shell DD | 1000 | 142.6 | 160.0 | 18.3 | 18.6 | 86.2 | 89.9 |
| 6. Control | — | 265.8 | 211.0 | 247.3 | 242.3 | — | — |

The phytotoxicity is determined 3 days after soil ventillation according to the known mustard method. The results are summarized in Table VI.

TABLE VI
Results of phytotoxicity tests

| Treatment | Dose kg./ha./l. | Shooting %, in the soil sample | | |
|---|---|---|---|---|
| | | 0—20 cm. | 20—40 cm. | 40—60 cm. |
| 1. Chinufur 10 g | 50 | 93 | 92 | 93 |
| 2. Citric acid+ KHCO$_3$ (Example 1) | 50 | 95 | 93 | 93 |
| 3. 5% by weight carbofuran+ citric acid+KHCO$_3$ (Example 3) | 50 | 94 | 93 | 94 |
| 4. 5% by weight carbofuran+ tartaric acid+ KHCO$_3$ (Example 4) | 50 | 95 | 95 | 95 |
| 5. Shell DD | 1000 | 35 | 31 | 35 |
| 6. Control | — | 95 | 96 | 96 |

The composition of the present invention having a lower active ingredient content give in a dose of 50 kg./ha. against wireworms and grubs/soil dwelling pests better results than Chinufur 10 G and the same results as Shell DD, respectively. Compositions containing no active ingredient and the half amount of carbofuran, respectively show high efficiency against nematodes. The results are particularly striking if they are compared to those obtained with the fumigant Shell DD. The efficiency of treatments 2., 3. and 4. is identical with or better than, respectively that of Shell DD in various soil levels and at the same time there is no risk of phitotoxicity.

Example 20

5.4 g. parts by weight of citric acid, 0.03 part by weight of Aerosil R-972 and 6.3 parts by weight of sodium bicarbonate are thoroughly admixed in a pug mill. 85.3 parts by weight of Chinufur 5 G are weighed in a roundbottomed flask and subjected to dry homogenization with the pre-mix prepared above. Finally 3.0 parts by weight of sunflower oil are applied onto the mixture and it is thoroughly admixed. 100.03 parts by weight of granules are obtained, carbofuran content 4.27 parts by weight. (The Chinufur 5 G is a composition comprising 5% by weight of carbofuran on a Fugran carrier).

Example 21

84.3 parts by weight of Chinufur 5 G and 4 parts by weight of sunflower oil are admixed in a roundbottomed flask, whereupon 5.4 parts by weight of citric acid are added, the mixture is homogenised and 6.3 parts by weight of sodium bicarbonate are added. The mixture is coated with 0.03 part by weight of Aerosil R 972 under vigorous shaking. Thus 100.03 g. of granules are obtained, carbofuran content 4.22 parts by weight.

Example 22

2.8 parts by weight of carbofuran (purity 90%) are added to 5 parts by weight of dimethylformamide and warmed until it is dissolved (at a temperature of about 50—55°C). The solution thus obtained is poured onto 34.3 parts by weight of Fugran, stirred, whereupon 2.7 parts by weight of citric acid, 3.15 parts by weight of sodium bicarbonate, 2 parts by weight of sunflower oil and 0.05 part by weight of Aerosil R 972 are added. The mixture is vigorously stirred after the addition of each component. Thus 50.0 parts by weight of granules are obtained, carbofuran content 2.52 parts by weight.

Example 23

A mixture of 2.8 parts by weight of carbofuran (purity 90%) and 5.0 parts by weight of dimethylformamide is heated to about 55°C. The solution is poured onto 3.55 parts by weight of Fugran, thoroughly admixed and the following components are added under stirring: 5.5 parts by weight of citric acid. 3.65 parts by weight of calcium carbonate, 1.5 parts by weight of sunflower oil. Thus 50.0 parts by weight of granules containing carbofuran are obtained.

13

Example 24

5.6 parts by weight of carbofuran (purity 90%) are dissolved in 10 parts by weight of dimethylformamide at a temperature of about 50—55°C. The solution is applied onto 64 parts by weight of Fugran and admixed, whereupon a pre-mix consisting of 11 parts by weight of citric acid and 0.1 part by weight of Aerosil R 972 is added under stirring. Finally 7.3 parts by weight of calcium carbonate and 2 parts by weight of sunflower oil are added, to yield 100 parts by weight of granules containing 5.04 parts by weight of carbofuran.

Example 25

41.7 parts by weight of Chinufur 5 G are admixed with 3.15 parts by weight of oxalic acid whereupon 3.15 parts by weight of sodium bicarbonate and thereafter 1.0 parts by weight of sunflower oil are added under stirring and the mixture is homogenised. Thus 48 parts by weight of granules are obtained, carbofuran content 2.09 parts by weight.

Example 26

39.85 parts by weight of Chinufur G are admixed with 5.5 parts by weight of citric acid, whereupon 3.65 parts by weight of calcium carbonate and thereafter 1.0 part by weight of sunflower oil are added. After homogenisation 50 parts by weight of granules are obtained, containing 2 parts by weight of active ingredient.

Example 27

A solution of 2.8 parts by weight of carbofuran (purity 90%) formed with 5 parts by weight of dimethylformamide is poured onto 31.05 parts by weight of Fugran whereupon the following components are added under homogenisation: 5.5 parts by weight of citric acid, 2.0 parts by weight of sunflower oil and 3.65 parts by weight of calcium carbonate. Thus 50.0 parts by weight of granules are obtained, carbofuran content 2.5 parts by weight.

Example 28

5.5 parts by weight of citric acid are added to 31.05 parts by weight of Fugran whereupon a solution of 2.8 parts by weight of carbofuran (purity 90%) and 5 parts by weight of dimethylformamide, and thereafter 1.5 parts by weight of sunflower oil, 3.65 parts by weight of calcium carbonate and 0.5 part by weight of sunflower oil are added under stirring. Thus 50.0 parts by weight of granules are obtained, active ingredient content 2.5 parts by weight.

Example 29

To 88 parts by weight of dimethylformamide 28 parts by weight of carbofuran (90% purity) and 55.0 parts by weight of citric acid are added at 55°C. The mixture is poured onto 266 parts by weight of Fugran under stirring whereupon 15 parts by weight of sunflower oil and 36.5 parts by weight of calcium carbonate—are added and the mixture is coated with 5 parts by weight of sunflower oil. Thus 493.5 parts by weight of granules are obtained, carbofuran content 25.2 parts by weight.

Example 30

In 61.0 parts by weight of dimethylformamide 28 parts by weight of carbofuran (purity 90%) and 20 parts by weight of oxalic acid are dissolved at 55°C whereupon the solution is poured onto 334 parts by weight of Fugran. The mixture is homogenised with 15 parts by weight of sunflower oil, 31.5 parts by weight of sodium bicarbonate are added and it is finally coated with 5 parts by weight of sunflower oil. Thus 494.5 parts by weight of granules are obtained, carbofuran content 25.2 parts by weight.

**Claims**

1. Granules for the control of nematodes and soil dwelling pests which contain, one or more of the following insecticidal-nematocidal compounds:

2,3-dihydro-2,2-dimethyl-7-benzofuranyl-N-methyl-carbamate;

0,0-diethyl-0-quinoxalin-2-yl-phosphorothioate;

0-ethyl-S,S-dipropyl-phosphorodithioate;

S-methyl-N′,N′-dimethyl-N-(methylcarbamoyl)oxy-1-thio-oxamidate;

0,0-diethyl-S-(ethylthiomethyl)-phosphorodithioate;

2-methyl-2-(methylthio)-propionaldehyde-0-(methylcarbamoyl)-oxime;

ethyl-4-methylthio-m-tolyl-isopropyl-phosphoramidate;

S-[((1,1-dimethyl-ethyl)-thio)-methyl]-0,0-diethyl-phosphorodithioate;

0,0-diethyl-0-(2-isopropyl)-6-methyl-pyrimidine-4-yl-phosphorothioate.

and 0.1—20% by weight of a binary or tertiary mixture of a hydrogen carbonate (I) of the formula $MHCO_3$ and/or a carbonate (II) of the formula $(M)_nCO_3$ (wherein M is a mono- or divalent metal ion or an ammonium group and n is 1 or 2) with an organic acid, the weight ratio of the hydrogen carbonate (I) and/or the

14

carbonate (II) to the organic acid being 1:10—10:1, in admixture with one or more solid organic or inorganic carriers.

2. Granules according to claim 1 which·contain up to 50% by weight of said insecticidal-nematocidal compound.

3. Granules according to claim 1 or claim 2 in which the bicarbonate (I) is sodium, potassium or ammonium hydrogen carbonate.

4. Granules according to any preceding claim in which the carbonate (II) is calcium carbonate.

5. Granules according to any preceding claim in which the organic acid has a dissociation equilibrium constant between $10^{-5}$ and $10^{-2}$.

6. Granules according to claim 5 in which the organic acid is citric acid, tartaric acid, oxalic acid, ascorbic acid, succinic acid, butyric acid, maleic acid or salicylic acid.

7. Granules according to any preceding claim containing a total of 5—10% of the hydrogen carbonate and/or carbonate and the organic acid.

8. Granules according to any preceding claim in which the ratio of the hydrogen carbonate and/or carbonate to the organic acid is 3:1—1:3.

9. Granules according to any preceding claim which further contain hydrophobic silicic acid, sodium aluminium silicate, polyvinylpyrrolidone-polyvinylacetate copolymer, magnesium stearate, or an animal, vegetable or mineral oil or other auxiliary agents.

10. A method for the control of nematodes and soil dwelling pests which comprises treating the surface to be protected with 1—100 kg/ha of granules as claimed in any one of the preceding claims.

11. A method according to claim 10 in which granules containing the hydrogen carbonate and/or carbonate and the organic acid (but not containing an insecticidal-nematocidal compound) are mixed on site with granules containing one or more of the insecticidal-nematocidal compounds as specified in claim 1 to obtain granules according to claim 1.

**Patentansprüche**

1. Granalien zur Bekämpfung von Nematoden und im Boden lebenden Schädlingen, die eine oder mehrere der folgenden insektiziden-nematoziden Verbindungen:

2,3-Dihydro-2,2-dimethyl-7-benzofuranyl-N-methylcarbamat;

0,0-Diäthyl-0-chinoxalin-2-yl-phosphorthionat;

0-Äthyl-S,S-dipropyl-phosphordithionat;

S-Methyl-N',N'-dimethyl-N-(methylcarbamoyl)-oxy-1-thio-oxamidat;

0,0-Diäthyl-S-(äthylthiomethyl)-phosphordithionat;

2-Methyl-2-(methylthio)-propionaldehyd-0-(methylcarbamoyl)-oxim;

Äthyl-4-methylthio-m-tolyl-isopropyl-phosphoramidat;

S-[((1,1-Dimethyl-äthyl)-thio)-methyl]-0,0-diäthyl-phosphordithionat;

0,0-Diäthyl-0-(2-isopropyl)-6-methyl-pyrimidin-4-yl-phosphorthionat;

und 0,1—20 Gew.-% einer binären oder tertiären Mischung eines Hydrogencarbonats (I) der Formel $MHCO_3$ und/oder eines Carbonats (II) der Formel $(M)_nCO_3$ (worin M ein mono- oder divalentes Metallion oder eine Ammoniumgruppe bedeutet und n für 1 oder 2 steht) mit einer organischen Säure enthalten, wobei das Gewichtsverhältnis des Hydrogencarbonats (I) und/oder des Carbonats (II) zur organischen Säure 1:10—10:1 beträgt, in Mischung mit einem oder mehreren festen organischen oder anorganischen Trägern.

2. Granalien nach Anspruch 1, die bis zu 50 Gew.-% der insektiziden-nematoziden Verbindung enthalten.

3. Granalien nach Anspruch 1 oder Anspruch 2, worin das Bicarbonat (I) Natrium-, Kalium- oder Ammoniumhydrogencarbonat ist.

4. Granalien nach einem vorhergehenden Anspruch, worin das Carbonat (II) Calciumcarbonat ist.

5. Granalien nach einem vorhergehenden Anspruch, worin die organische Säure eine Dissoziationsgleichgewichtskonstante zwischen $10^{-5}$ und $10^{-2}$ hat.

6. Granalien nach Anspruch 5, worin die organische Säure Zitronensäure, Weinsäure, Oxalsäure, Ascorbinsäure, Bernsteinsäure, Buttersäure, Maleinsäure oder Salicylsäure ist.

7. Granalien nach einem vorhergehenden Anspruch, enthaltend eine Gesamtmenge von 5—10% des Hydrogencarbonats und/oder Carbonats und der organischen Säure.

8. Granalien nach einem vorhergehenden Anspruch, worin das Verhältnis des Hydrogencarbonats und/oder Carbonats zur organischen Säure 3:1—1:3 ist.

9. Granalien nach einem vorhergehenden Anspruch, die weiters hydrophobe Kieselsäure, Natriumaluminiumsilikat, Polyvinylpyrrolidon-Polyvinylacetatcopolymerisat, Magnesiumstearat oder ein tierisches, pflanzliches oder mineralisches Öl oder andere Hilfsmittel enthalten.

10. Verfahren zur Bekämpfung von Nematoden und im Boden lebenden Schädlingen, welches eine Behandlung der zu schützenden Oberfläche mit 1—100 kg/ha Granalien nach irgendeinem der vorhergehenden Ansprüche umfaßt.

11. Verfahren nach Anspruch 10, wobei Granalien, welche das Hydrogencarbonat und/oder Carbonat und die organische Säure (aber keine insektizide-nematozide Verbindung) enthalten, an Ort und Stelle mit eine oder mehrere der insektiziden-nematoziden Verbindungen nach Anspruch 1 enthaltenden Granalien gemischt verden, um Granalien nach Anspruch 1 zu erhalten.

**Revendications**

1. Granules pour lutter contre les nématodes et les parasites se trouvant dans le sol qui contient un ou plusieurs des composés insecticides-nématocides suivants:
2,3-dihydro-2,2-diméthyl-7-benzofuranyl-N-methyl-carbamate;
0,0-diéthyl-0-quinoxalin-2-yl-phosphorothioate;
0-éthyl-S,S-dipropyl-phosphorodithioate;
S-méthyl-N',N'-diméthyl-N-(méthylcarbamoyl)oxy-1-thio-oxamidate;
0,0-diéthyl-S-(éthylthiométhyl)-phosphorodithioate;
2-méthyl-2-(méthylthio)-propionaldéhyde-0-(méthylcarbamoyl)-oxime; ·
éthyl-4-méthylthio-m-tolyl-isopropyl-phosphoramidate;
S-[((1,1-diméthyl-éthyl)-thio)-méthyl]-0,0-diéthylphosphorodithioate;
0,0-diéthyl-0-(2-isopropyl)-6-méthyl-pyrimidine-4-yl-phosphorothioate,
et de 0,1 à 20% en poids d'un mélange binaire ou tertiaire d'un carbonate acide de formule $MHCO_3$ et/ou d'un carbonate (II) de formule $(M)_nCO_3$ (où M est un ion métallique mono- ou divalent ou un groupe ammonium et n vaut 1 ou 2) avec un acide organique, le rapport pondéral du carbonate acide (I) et/ou du carbonate (II) à l'acide organique étant de 1:10—10:1, mélangé à un ou plusieurs supports organiques ou inorganiques solides.

2. Granules selon la revendication 1 contenant jusqu'à 50% en poids dudit composé insecticide-nématocide.

3. Granules selon les revendications 1 et 2 où le bicarbonate (I) est le carbonate acide de sodium, de potassium ou d'ammonium.

4. Granules selon l'une quelconque des revendications précédentes où le carbonate (II) est le carbonate de calcium.

5. Granules selon l'une quelconque des revendications précédentes où l'acide organique a une constante d'équilibre de dissociation comprise entre $10^{-5}$ et $10^{-2}$.

6. Granules selon la revendication 5 où l'acide organique est l'acide citrique, l'acide tartrique, l'acide oxalique, l'acide ascorbique, l'acide succinique, l'acide butyrique, l'acide maléique ou l'acide salicylique.

7. Granules selon l'une quelconque des revendications précédentes contenant un total de 5—10% du carbonate acide et/ou du carbonate et l'acide organique.

8. Granules selon l'une quelconque des revendications précédentes où le rapport du carbonate acide et/ou du carbonate à l'acide organique est de 3:1—1:3.

9. Granules selon l'une quelconque des revendications précédentes qui contiennent en outre de l'acide silicique hydrophobe, du silicate de sodium-aluminium, du copolymère polyvinylpyrrolidone-polyvinyl-acétate, du stéarate de magnésium, ou une huile animale, végétale ou minérale ou d'autres agents auxiliaires.

10. Procédé de lutte contre les nématodes et les parasites qui se trouvent dans le sol dans lequel on traite la surface à protéger avec 1—100 kg/ha de granules selon l'une quelconque des revendications précédentes.

11. Procédé selon la revendication 10 où l'on mélange sur place les granules contenant le carbonate acide et/ou le carbonate et l'acide organique (mais ne contenant pas de composé insecticide-nématocide) avec des granules contenant un ou plusieurs des composés insecticides-nématocides tels que précisés dans la revendication 1 pour obtenir des granules selon la revendication 1.